Europäisches Patentamt

European Patent Office

Office européen des brevets

(11) Publication number: **0 179 540**
A2

# EUROPEAN PATENT APPLICATION

(21) Application number: **85301416.5**

(22) Date of filing: **01.03.85**

(51) Int. Cl.⁴: **G 01 D 15/18**

(30) Priority: **30.03.84 GB 8408260**

(43) Date of publication of application:
**30.04.86 Bulletin 86/18**

(84) Designated Contracting States:
**DE FR GB IT NL**

(71) Applicant: IMPERIAL CHEMICAL INDUSTRIES PLC
Imperial Chemical House Millbank
London SW1P 3JF(GB)

(72) Inventor: Owen, David James
44 Spitalfields
Yarm Cleveland(US)

(72) Inventor: McLaine, Colin Grant
10 Tofts Close Low Worsall
Yarm Cleveland(US)

(74) Representative: Gratwick, Christopher et al,
Imperial Chemical Industries PLC Legal Department:
Patents PO Box 6 Bessemer Road
Welwyn Garden City Herts, AL7 1HD(GB)

(54) Printer.

(57) A printer having a felt- or fibre- tip type marker as an ink applicator (8) spaced from a sheet-like substrate, e.g. paper (1), contacting an electrically conductive member (3). Means (4, 5, 7, 11) are provided for effecting relative movement between the applicator (8) and the substrate (1) in response to signals from a control unit (6). Means (12, 13, 14) are also provided to produce a sufficient potential difference between the marker tip (10) and the substrate (1) to draw a ligament of ink away from the marker tip (10).

Fig .1.

## Printer

This invention relates to printers and in particular to printers where a mark is applied from an applicator on to a substrate at a particular location determined by signals from a control unit.

Examples of such printers include chart recorders, line printers and flat bed plotters. Such printers are characterised by means for effecting relative movement between an applicator and the substrate in a plane perpendicular to the perpendicular from the applicator to the substrate so that the applicator can be moved, relative to the substrate, to the position at which a mark on the substrate is desired. The applicator may make a mark continuously as it is moved relative to the substrate, thereby tracing out a line on the substrate or may make intermittent marks e.g. giving dots, dashes, or discrete characters.

We have devised an applicator arrangement wherein the requisite mark is made by a fine stream or spray of the ink from an applicator that does not contact the substrate. By the term ink we include any liquid that provides a visually distinctive mark on the substrate.

In the present invention the stream of ink is provided electrostatically. If an electrical field of suitably high strength is established between a surface, e.g. a nozzle, to which ink is supplied and an electrode disposed spaced from the surface, the ink is drawn away from the surface towards the electrode as one or more fine ligaments of electrically charged ink. At a certain distance from the surface the ligament or ligaments break up to form a divergent spray of electrically charged ink droplets. The ligament length depends on the applied field strength and on the electrical and physical characteristics of the ink, particularly its resistivity, surface tension, and viscosity. For normal non-aqueous inks with an applied voltage of the order of 1 to 15 kV, the ligament length is usually no more than 15 mm and is often less than 10 mm.

Printers utilising this concept of ligament formation to transfer the ink from a nozzle to the substrate have been described in US Patents 3887928 and 3968498. In those references the electrical field was generated between a nozzle and a perforate member so that the resultant ink stream was projected through the perforate member on to the substrate. The nozzle employed in those references was a small bore tube, typically of internal diameter in the range 0.2 to 0.35 mm.

We have found that that type of printer suffers from two serious disadvantages: firstly the nozzle is liable to blockage, for example as a result of the ink drying out and depositing solid ink pigment particles in the fine nozzle; also, unless the tip configuration is carefully precision engineered, as disclosed in the aforesaid US patents, there is a risk of jet instability and branching, forming a plurality of ligaments, with consequent non-uniformity and blurring of a line trace. Such precision engineering inevitably means that satisfactory nozzles are relatively expensive and are easily damaged.

Furthermore, in the form of printer disclosed in the aforesaid US patents, the electrical field causing ligament formation is established between the nozzle and a perforate plate through which the ink stream is projected on to the substrate. Unless the nozzle is accurately centred with respect to the aperture in the plate, the ink stream is liable to be deflected by the perforated plate.

In the present invention there is employed an alternative nozzle configuration having a porous wick extending therefrom. In the present invention the electrical field is generated between the tip of the wick and the substrate: an electrically conductive member is disposed such that the charge created on the substrate by the deposition of the electrically charged ink thereon is conducted, via the substrate, to the conductive member.

Accordingly the present invention provides printing apparatus for printing on a sheet-like substrate, said apparatus having

(a)       an applicator including a surface mounted spaced from the substrate and an ink supply to said surface,

(b)       means for effecting relative movement between said applicator and said substrate in a plane perpendicular to the perpendicular from said applicator to said substrate in response to a signal or signals from a control unit,

(c)       an electrically conductive member spaced from said surface, and

(d)       means to apply to said surface a sufficiently large electrical potential, relative to said conductive member, that sufficient electrical gradient is provided at said surface to draw a ligament of said ink away from said surface towards said substrate,

characterised in that said electrically conductive member is disposed for contact with said substrate whereby charge produced on said substrate by the deposition of ink thereon can be conducted, via said substrate, to said electrically conductive member, and in that said surface comprises the tip of a porous wick material extending from a nozzle.

The control unit may be a measuring instrument producing an output signal indicative of the parameter being measured or may be a more complex unit such as a computer, by which term we include related hardware such as micro-processors. The invention is of particular utility as a printer for portraying computer graphics.

The signal or signals from the control unit include signals to determine the co-ordinates at which it is desired to effect the mark from the applicator. The means effecting the relative movement of the applicator relative to the substrate may include a suitable arm, carrying the applicator, driven by a motor or motors which may be electrically, pneumatically, or hydraulically powered. In some cases the substrate may be moved in one direction, e.g. continuously, or intermittently, as in a conventional linear or disc chart recorder or a line printer, while the applicator is moved, under the control of the control unit, in a direction transverse to the direction of substrate movement.

Alternatively the substrate may be stationary and the applicator moved to the appropriate position thereover.

As mentioned hereinafter means may also be provided for effecting relative movement in the third dimension, i.e. to vary the distance of the tip of the wick from the substrate in response to signals from the control unit.

The applicator nozzle has a porous wick protruding from a support. The types of porous felt or plastic pads or fibre bundles widely used in graphic implements such as felt- or fibre- tip markers or felt- or fibre- tip pens, for example of the type described in UK patent 628350, are eminently suitable as the wick material.

The cross-sectional area of the porous wick can be up to 1 cm square but preferably is in the range 0.02 to 0.2 $cm^2$.

The wick configuration may have some effect on the nature of the electrical field at the wick tip and hence on the shape of the spray produced: preferably the wick tip has a pointed, hemispherical, or "bullet head" configuration. It is preferred that the wick tip has at least one radius of curvature below 5 mm, particularly below 2 mm.

The wick configuration may affect the volumetric flow of ink from the wick when the potential is applied.

To vary the flow rate the nozzle and wick may be

0179540

demountable from the applicator so that it can be exchanged for another nozzle and wick of differing configuration. The viscosity of the ink will also affect the volumetric flow rate.

The means for supplying the ink to the wick will generally comprise an ink reservoir and a fluid connection from the reservoir to the nozzle. The reservoir may comprise a cartridge, which may be refillable, which can be disconnected from the applicator so that the reservoir can be replaced. Where the reservoir is part of the applicator, feed of ink to the wick is preferably effected by capillary action, e.g. by the wick of porous material extending from the nozzle to the reservoir. The reservoir may be a wad of absorbent material, e.g. felt or wadding impregnated with the ink, within a suitable casing.

Alternatively the reservoir may be remote from the applicator and connected thereto by a flexible tube. In this case the reservoir may be pressurised to supply the ink to the wick. Alternatively a pump may be used to supply the ink to the wick.

It will be appreciated however that, if the supply of ink is pressurised, or a pump is employed, the pressure on the ink must be insufficient to overcome the forces, e.g. surface tension forces, preventing flow of ink from the wick when the high potential is not applied.

In one preferred form of the invention the reservoir, nozzle and wick constitute a single cartridge unit which can be removed from the applicator and exchanged for another cartridge: the cartridge in such cases is conveniently a felt- or fibre- tip applicator, for example a felt- or fibre- tip marker of the type widely used in graphic work.

The apparatus of the invention includes means for applying a high potential, relative to the conductive member in contact with the substrate, to the wick.

It is necessary that the high potential applied to the wick is sufficient that, when the wick tip is at the requisite distance above the substrate, the ink is drawn away from the wick as a ligament. It will be appreciated that the applied potential will generally be such as to enable discharge of the ink from the wick to occur over a range of distances of the wick tip from the substrate. The potential required at the wick tip to effect such liquid discharge will depend on the nature of the ink, e.g. its resistivity and the nozzle configuration but will generally be within the range 1 to 25 kV, in particular between 2 and 20 kV, and may be negative, or, preferably, positive with respect to the electrically conductive member.

The wick tip/substrate distance will generally be within the range 1 to 50 mm.

The substrate, which is suitably paper or thin card, should have sufficient surface and/or volume conductivity that there is rapid dissipation, to the conductive member in contact with the substrate, of the charge transferred to the substrate by the charged ink alighting thereon. Thus insulating materials, such as plastics films or sheets are, in general, not suitable as the substrate.

The conductive member is preferably disposed contacting the surface of the substrate on the side thereof remote from the wick at least at the location where it is desired that a mark is made.

The electrical current flowing as a result of the transfer of the charged ink from the wick to the substrate will generally be within the range 1 to 5000, and usually below 1000, nA. It is preferred that the substrate has sufficient surface and/or volume conductivity that the resistance to earth from the region of the substrate surface nearest the wick is less than 10 G$\Omega$, particularly less than 1 G$\Omega$

The ink typically has a viscosity in the range $10^{-4}$ to $10^{-1}$ Pa.s and a surface tension of $10^{-2}$ to $10^{-1}$ N.m$^{-1}$. While aqueous inks, e.g. Indian ink, can be used, they tend to produce a succession of droplets rather than a continuous stream of ink from the wick. It is preferred to employ non-aqueous inks, particularly spirit based inks, having a resistivity above $10^4$,

and in particular between $10^7$ and $10^{12}$, ohm. cm.

In the present invention the nature, i.e. breadth and intensity, of the mark made by the applicator depends on a number of factors including the nature of the ink and substrate, the wick configuration, the spacing of the wick tip from the substrate, the magnitude of the applied potential and the duration of the applied potential while the applicator is at the desired position.

In addition to the signals determing the positioning of the applicator relative to the substrate, the control unit may provide signals which determine the duration of the applied voltage, the wick tip/substrate spacing and the magnitude of the high potential.

As mentioned hereinbefore, the ligament drawn away from the wick by the electrical field will break up into a divergent spray of fine droplets, typically of diameter 10 - 30 μm, at a certain distance from the wick tip. Thus when the wick tip is relatively close, e.g. 1 to 10 mm, to the substrate, a relatively fine mark, typically of width less than 1 mm, often less than 0.5 mm, is produced by the ligament. This enables lines or characters to be drawn. If however the wick tip/substrate distance is greater than the ligament length, for example if the wick tip/substrate distance is 15 to 50 mm, the ligament will break up to form a divergent spray. This is of use in those applications where it is desired to apply a mark all over an area determined by the control unit rather than merely draw a line or series of dots, dashes, or other characters. While this can be done in conventional printers by drawing a succession of close spaced lines, or lines of characters, over the desired area, this mode of filling in an area tends to be relatively slow.

Then by increasing the wick tip/substrate spacing so that the ligament breaks up into a divergent droplet spray before it contacts the substrate, the applicator can be used to mark an area rather than draw a narrow trace. Typically with the wick tip 25 mm from the substrate, without effecting any movement of the

**0179540**

applicator relative to the substrate, a circular mark of diameter 3 mm or more can be produced. The size of the mark will
depend on the nature of the wick, ink, and substrate, and
applied potential: in many cases marks of diameter of the
order of 1 cm or more can be obtained with a wick tip/substrate spacing of 2.5 cm. The conductivity of the substrate
has an effect on the width of the mark: poorly conducting substrates tend to give broader marks than substrates that are good
conductors.

Therefore in accordance with a further feature of the
invention the apparatus is provided with means for varying the
wick tip/substrate distance in response to signals from the
control unit.

The magnitude of the potential applied to the nozzle
tends to affect the volumetric flow rate of ink from the nozzle:
increasing the potential increases the flow rate. This is of
particular utility in relation to chart recorders where, on
occasions, a rapid movement of the applicator relative to the
substrate takes place to record a rapidly changing parameter.
By increasing the voltage when the rate of relative movement
increases, the intensity of the trace on the substrate may be
rendered more uniform.

When the wick tip is close to the substrate, if the
applied potential is too high, spark discharges may occur instead of, or as well as, formation of the ink jet. Hence if
the apparatus is arranged so that the distance of the wick tip
from the substrate is varied, it is preferred that provision is
also made for varying the applied potential so that such spark
discharges can be avoided.

For reasons not at present understood, if the applied
potential is reduced below a certain level (depending on the
nature of the wick and ink and the wick tip/substrate spacing),
a discontinuous rather than a continuous ink stream may be produced. Hence by effecting movement of the applicator relative
to the substrate at such applied potentials dotted rather than continuous lines can be produced.

Discontinuous spraying can also be effected by switching the applied high potential on and off. Where the magnitude of the potential is such that switching thereof presents undue problems, the high potential may be provided as a pulse, or train of pulses from a suitable generator via a step-up transformer. The length of such a pulse train can be determined by switching lower voltages in the primary circuit of the step-up transformer. However in this case, where it is desired to provide for discontinuous operation, the applicator should have a low capacitance so that formation of the ink stream does not continue for any significant time after cessation of supply of pulses from the high voltage generator.

Control of the formation of the ink stream may also be achieved by the technique described in aforesaid USP 3887928 by disposing a control electrode, preferably a ring, adjacent the wick tip but spaced therefrom.

By varying the potential on the control electrode, e.g. by means of signals from the control unit, the ink stream can be switched on and off. Alternatively a switching action can be achieved by moving the position of the control electrode relative to the wick tip in response to signals from the control unit.

In some cases it is desirable to make marks of differing colours. The applicator may comprise a number of nozzles each with its own wick, ink and high potential supply. Thus the applicator may comprise a number of cartridges which are together moved, relative to the substrate, to the desired mark location. In this case the signals determining movement of the applicator relative to the substrate should also have a further component or components to adjust the applicator position relative to the substrate to position the selected nozzle at the desired location and to actuate the selected nozzle, i.e. to cause the ink to be transferred from the wick thereof to the substrate.

Alternatively the apparatus may be arranged so that, in response to a signal from the control unit indicative of the colour to be applied, an applicator of the desired colour is transported from a storage location to the desired location.

Where it is desired to spray over a significant area, rather than to draw lines or characters, it may be desirable to employ a mask to obtain sharp edges to the marked area. The mask may be a component made from an electrical insulant. Alternatively it may be an electrode maintained at a potential similar to that applied to the wick.

The apparatus may therefore include a masking device which is moved, relative to the substrate, in response to signals from the control unit, to determine the position of such sharp edges. Such a mask can also be used to effect an on/off switching action by moving the mask relative to the wick tip so that the mask is between the wick tip and substrate in the "off" position.

One embodiment of the invention is illustrated by reference to the accompanying drawings wherein

Figure 1 is a diagrmmatic plan of the apparatus and

Figure 2 is a diagrammatic side elevation of the apparatus.

The substrate 1, e.g. paper, is fed from a roll 2 over a metal plate 3. The paper is advanced over plate 3 by rollers 4 driven by a motor 5 controlled by signals from a control unit 6, e.g. a computer.

Positioned above plate 3 is an arm 7 carrying a cartridge 8 in the form of a fibre-tip marker having a spirit ink reservoir and a nozzle consisting of a metal sleeve 9 with a fibre tip 10 projecting therefrom. Arm 7 can be moved transversely to the direction of movement of the paper by an actuator 11 controlled by signals from control unit 6.

A high potential is applied to sleeve 9 via a lead 12 carried by arm 7 from a high voltage generator 13. The return, ie "earth", connection 14 from generator 13 is connected to plate 3. If desired the magnitude and/or duration of the high potential applied to sleeve 9 can be varied by signals along line 15 from control unit 6 to generator 13.

If desired actuator 11 can move arm 7 up and down relative to plate 3 to vary the height of the fibre tip 10 from the paper 1.

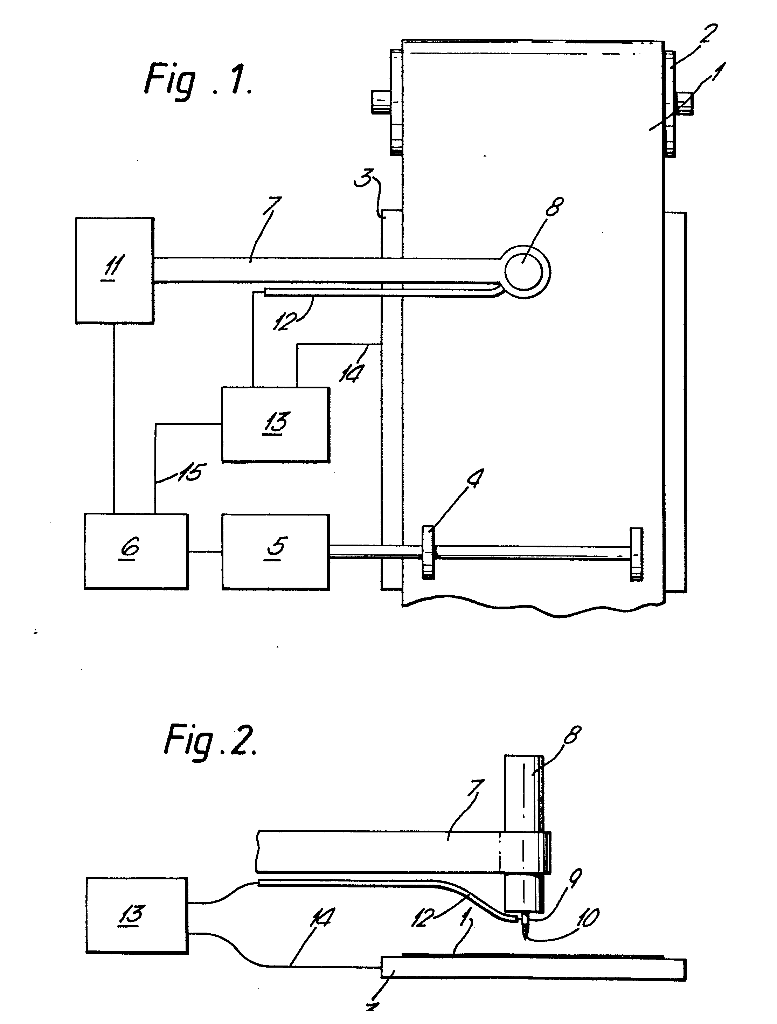

In a series of experiments using apparatus similar to that illustrated in Figures 1 and 2, marks or traces were made on paper with different colour fibre-tip markers, at various applied voltages, and tip/paper spacings.

The fibre-tip markers were Textmark 700 pocket pen markers having fibre tips having a 6 mm long bullet-head shaped end and a maximum diameter of 4 mm. Since these pens have a metal case with the fibre tip mounted in a plastic moulding screwed on to the end of the case, the lead 12 was attached to the metal case rather than to the nozzle itself.

| Pen | Tip/paper spacing (mm) | Voltage (kV) | Current (nA) | Trace | |
|---|---|---|---|---|---|
| | | | | width | intensity |
| Red | 2 | 5 | 10 | fine | dark |
| | 25 | 9 | 10 | broad | medium |
| Green | 2 | 4 | 2 | fine* | dark |
| | 2 | 4.5 | - | fine | dark |
| | 2 | 5 | - | fine | dark |
| | 25 | 8 | 5 | broad | feeble |
| | 25 | 9 | 10 | broad | feeble |
| | 25 | 10 | 20 | broad | dark |
| | 25 | 11 | 500 | broad | dark but "gritty" texture |
| Yellow | 2 | 5 | - | fine* | dark |
| | 2 | 5.5 | 3 | fine | dark |
| | 25 | 9 | 2 | broad | medium |
| Black | 2 | 4 | 20 | fine | medium |
| | 2 | 5 | 700 | fine | medium |
| | 25 | 10 | 70 | broad | feeble |
| | 25 | 12 | 2100 | broad | dark |

* discontinuous, i.e. dotted, trace.

The "fine" traces were below approximately 0.3 mm in width while the "broad" traces were approximately 3 mm (yellow) to 6 mm (green) in width. When there was no relative movement during spraying with the tip/paper spacing of 25 mm, circular marks of about 5 mm (yellow) to 10 mm (red) were produced that did not increase in size, but increased in intensity, as the duration of the spray increased from 1 second to 5 seconds.

In a further example a computer graphics plotter model 1342 made by Benson Electronics Limited was employed.

In this plotter a carriage carrying an applicator is moveable, in response to signals from a control unit, along the length of a roller over which paper, forming the substrate, passes. Movement of the paper longitudinally is effected mechanically in response to signals from the control unit. The carriage movement is thus transverse to the paper. The normal applicator in this plotter is a rolling-ball type graphic marker and on/off action is achieved by moving the tip of the marker, in response to signals from the control unit, into and out of contact with the paper.

In the example the normal rolling ball-type marker was replaced by a Textmark 700 fibre tip marker as used in the aforementioned experiments but held in a fixed position with the tip 8 mm above the paper. Since in this plotter the roller beneath the paper over which the carriage moves is made of a non-conductive plastics material, a fine wire "brush" was attached to the carriage so that it contacted the surface of the paper at a distance of about 50 mm from the marker tip.

A control electrode in the form of a wire ring was disposed 3 mm above the paper surface concentric with the marker tip.

A voltage of about + 5 kV, relative to earth, was applied to the metal casing of the marker and the brush was earthed. The on/off signals to the carriage were used to switch off and on a voltage of about + 1.9 kV, relative to earth, to the control electrode instead of moving the applicator into and out of contact with the paper. Marks were made on the substrate while the voltage on the control electrode was off and no marks were made while 1.9 kV was applied to the control electrode. When used to reproduce engineering drawings in response to a program supplied to the control unit, high quality drawings were obtained using a variety of Textmark pens of differing colours (red, green, brown, blue).

PA/CG/MP
13 February 1985

1.        Printing apparatus for printing on a sheet-like substrate, said apparatus having

(a)        an applicator including a surface mounted spaced from said substrate and an ink supply to said surface,

(b)        means for effecting relative movement between said applicator and said substrate, in a plane perpendicular to the perpendicular from said surface to said substrate, in response to a signal or signals from a control unit,

(c)        an electrically conductive member spaced from said surface, and

(d)        means to apply to said surface a sufficiently large electrical potential, relative to said conductive member, that sufficient electrical gradient is provided at said surface to draw a ligament of said ink away from said surface towards said substrate,

characterised in that said electrically conductive member is disposed for contact with said substrate whereby charge produced on said substrate by the deposition of ink thereon can be conducted, via said substrate, to said electrically conductive member, and in that said surface comprises the tip of a porous wick material extending from a nozzle.

2.        Apparatus according to claim 1 wherein said applicator comprises a cartridge unit having an ink reservoir and a porous wick extending therefrom.

3.        Apparatus according to claim 2 wherein said applicator is a felt-, or fibre-, tip graphic marker.

4.        Apparatus according to any one of claims 1 to 3 wherein the electrically conductive member is disposed contacting the surface of the substrate on the side thereof remote from the wick.

5.        Apparatus according to any one of claims 1 to 4 including means to vary the potential applied to the wick in response to a signal from the control unit.

6.        Apparatus according to any one of claims 1 to 5 including a control electrode disposed adjacent to, but spaced from, the wick, means to apply a high potential, relative to said conductive member, to said control electrode, and means to vary the potential
applied to said control electrode in response to a signal from
the control unit.

7.        Apparatus according to any one of claims 1 to 6
including means to vary the spacing of the wick tip from said
substrate in response to a signal from the control unit.

8.        Apparatus according to any one of claims 1 to 7 including
a plurality of applicators and means, controlled by said control
unit, to determine the applicator to be actuated.

0179540

Fig .1.

Fig .2.